# EUROPÄISCHE PATENTANMELDUNG

(11) **EP 3 316 203 A1**
(43) Veröffentlichungstag der Anmeldung: **02.05.2018**
(21) Anmeldenummer: 16196639.5
(22) Anmeldetag: 31.10.2016
(51) Int. Cl.: G06Q 20/34, G06Q 20/04, G06Q 20/06

(54) **VERFAHREN ZUR DURCHFÜHRUNG BARGELDLOSER ZAHLUNGSVORGÄNGE MIT KARTEN VON GESCHLOSSENEN UND VON OFFENEN ZAHLUNGSSYSTEMEN**

(71) Anmelder: Feig Electronic GmbH, 35781 Weilburg (DE)
(72) Erfinder: Jung, Michael, 60316 Frankfurt am Main (DE); Tschunko, Benjamin, 35396 Gießen (DE)
(74) Vertreter: Knefel, Cordula

(57) **Zusammenfassung**

Die Erfindung betrifft ein Verfahren zur Durchführung bargeldloser Zahlungsvorgänge mit Karten von geschlossenen und von offenen zahlungssystemen, bei dem
- eine Zugriffssteuerungseinheit für Karten mittels wenigstens eines Kartenlesers erfasst, ob eine Karte eines offenen oder eines geschlossenen Zahlungssystems in einem Erfassungsbereich des Kartenlesers angeordnet ist,
- die Zugriffssteuerungseinheit unmittelbar oder mittelbar einen direkten Kommunikationskanal zwischen dem wenigstens einen Kartenleser und einer Verarbeitungseinheit für geschlossene oder offene zahlungssysteme freischaltet und/oder abschaltet,
- und dass die Verarbeitungseinheit für geschlossene Zahlungssysteme und die Verarbeitungseinheit für offene Zahlungssysteme in voneinander getrennten Applikationen arbeiten.

## Beschreibung

Die Erfindung betrifft ein Verfahren zur Durchführung bargeldloser Zahlungsvorgänge mit Karten von geschlossenen und von offenen Zahlungssystemen.

Bei Karten für bargeldlose Zahlungssysteme unterscheidet man grundsätzlich zwischen Karten für offene Zahlungssysteme und für geschlossene Zahlungssysteme.

In einem offenen Zahlungssystem werden die bargeldlosen Zahlungen (Transaktionen) von internationalen Hintergrundsystemen zur Abwicklung von Transaktionen verarbeitet. Karten tragen das Logo eines Zahlungsdienstleisters wie MasterCard (eingetragene Marke der MasterCard International Incorporated, USA), American Express (eingetragene Marke der American Express Marketing & Development Corp. USA), Discover (eingetragene Marke der Discover Financial Services, USA), Visa (eingetragene Marke der Visa International Service Association, Foster City Kalifornien, USA) usw.. Diese Karten können an einer Vielzahl von Akzeptanzstellen für bargeldlose Zahlungen verwendet werden. Um den Missbrauch von Kartendaten zu vermeiden, müssen alle Systemkomponenten zur Abwicklung von Transaktionen nach definierten Standards zugelassen werden. Terminals müssen insbesondere sicherstellen, dass keine sensitiven Daten der Karten wie Zahlungskartennummern (Primary Account Number - PAN) oder persönliche Identifikationsnummer (PIN) das Terminal im Klartext verlassen. Darüber hinaus müssen alle kryptographischen Schlüssel geschützt werden, die für die sichere Kommunikation des Terminals mit dem Hintergrundsystem erforderlich sind.

Bei geschlossenen Zahlungssystemen ist die Zahlungsabwicklung nur innerhalb eines geschlossenen Verbundes möglich. Die Akzeptanz von Karten eines geschlossenen Zahlungssystems ist auf die Mitglieder des Verbundes beschränkt. Die Sicherheitsanforderungen an dieses System werden von dem jeweiligen Betreiber festgelegt.

In einigen Märkten hat sich die Nutzung von Karten geschlossener Zahlungssysteme etabliert. Sollen diese Systeme nun um die Akzeptanz von Karten offener Zahlungssysteme erweitert werden, stehen die Betreiber vor der Herausforderung, dass die Sicherheitsanforderungen an offene Zahlungssysteme sehr hoch sind. Hier wird in der Regel eine Sicherheitszertifizierung gefordert.

Aus der Praxis ist bekannt, dass ein Terminal im Wesentlichen eine Applikation ausführt, die eine Transaktion durchführt und die Geschäftslogik umsetzt. Für die Anbindung des Terminals an Hintergrundsysteme zur Abwicklung von Transaktionen werden kryptographische Schlüssel benötigt. Diese Schlüssel werden üblicherweise in einem Schlüsselspeicher des Terminals von einer zertifizierten Firmware geschützt und von der Applikation lediglich genutzt. Die Kommunikation mit der Karte eines Zahlungssystems erfolgt über einen Kartenleser. Applikationen haben, wie aus der Praxis bekannt, Zugriff auf den Kartenleser und können die sensitiven Daten einer Karte, wie zum Beispiel die Zahlungskartennummer auslesen und verarbeiten. Daher müssen Applikationen sicherstellen, dass sensitive Daten das Terminal nie im Klartext verlassen. Aufgrund dieser Anforderung unterliegen die Applikationen entsprechenden Sicherheitszertifizierungen. Für die Akzeptanz von Karten offener und geschlossener Zahlungssysteme an ein und demselben Terminal ist es erforderlich, festzustellen, welche Karte vorliegt, um die Karte gemäß des vorliegenden Zahlungssystems zu verarbeiten.

Da der direkte Zugriff auf den Kartenleser nur von einer Applikation möglich ist, muss die Verarbeitung aller Karten in einer Applikation erfolgen. Damit ist jedoch die gesamte Applikation Teil der Sicherheitszertifizierung für das offene Zahlungssystem. Das bedeutet, dass Änderungen der Verarbeitungseinheit oder der Geschäftslogik für das geschlossene Zahlungssystem eine erneute Sicherheitszertifizierung für das offene Zahlungssystem erfordern. Zudem erhöht sich das Risiko einer Sicherheitslücke aufgrund der erhöhten Komplexität der Applikation.

Aus der Praxis ist bekannt, eine Zugriffssteuerungseinheit für Karten vorzusehen, die auf einen Kartenleser zugreift. Über diese Zugriffssteuerungseinheit für Karten erfolgt die Kommunikation mit der Verarbeitungseinheit und Geschäftslogik für geschlossene Zahlungssysteme wie auch mit der Verarbeitungseinheit und Geschäftslogik für offene Zahlungssysteme.

Aus der Praxis ist bekannt, eine Hauptapplikation mit der Verarbeitungseinheit für offene Zahlungssysteme vorzusehen, die die Verarbeitung von Karten für offene Zahlungssysteme durchführt. Hierin ist eine Zugriffssteuerungseinheit für den Kartenleser, eine Verarbeitungseinheit für offene Zahlungssysteme und die Anbindung des Terminals an das Hintergrundsystem zur Abwicklung von Transaktionen beinhaltet. Die Verarbeitungseinheit für offene Zahlungssysteme funktioniert beispielsweise mittels zertifizierter Kernel, wie in den Dokumenten "EMV Contactless Specifications for Payment Systems", Book A, Architecture and General Requirements, Version 2.6, March 2016, Book B, Entry Point Specification, Version 2.6, July 2016, Book C-1, Kernel 1 Specification, Version 2.6, February 2016, Book C-2, Kernel 2 Specification, Version 2.6, February 2016, Book C-3, Kernel 3 Specification, Version 2.6, February 2016, Book C-4, Kernel 4 Specification, Version 2.6, February 2016, Book C-5, Kernel 5 Specification, Version 2.6, February 2016, Book C-6, Kernel 6 Specification, Version 2.6, February 2016, Book C-7, Kernel 7 Specification, Version 2.6, February 2016, Book D, EMV Contactless Communication Protocol Specification, Version 2.6, March 2016 (EMV - eingetragene Marke der EMVCo, LLC, USA) beschrieben.

Wird von der Zugriffssteuerungseinheit der Hauptapplikation eine Karte für ein geschlossenes Zahlungssystem erkannt, so wird ein Kommunikationskanal zur Karte über die Hauptapplikation zur Verfügung gestellt, beispielsweise bei Unix Betriebssystemen über Unix Domain Socket Verbindungen. Die Kommunikation mit der Karte kann in diesem Fall durch weitere Applikationen auf dem Terminal oder einem extern angeschlossenen Gerät, zum Beispiel einer Kasse erfolgen, das jedoch nie Zugriff auf eine Karte eines offenen Zahlungssystems bekommt. Daher ist der Zugriff auf sensitive Daten der Karte nicht möglich, so dass lediglich die Hauptapplikation Teil der Sicherheitszertifizierung für das offene Zahlungssystem ist. Die Kommunikation mit der Karte kann jedoch aufgrund des Umweges über die Hauptapplikation nicht die maximale Geschwindigkeit erreichen.

Der Zugriff auf die Benutzerschnittstellen zur akustischen und visuellen Signalisierung ist zu einem bestimmten Zeitpunkt nur von einer Applikation möglich. Daher muss die Benutzerschnittstelle während der Verarbeitung von Karten eines geschlossenen Zahlungssystems entweder freigegeben oder als Schnittstelle von der Hauptapplikation zur Verfügung gestellt werden.

Terminals innerhalb eines geschlossenen Verbundes finden sich beispielsweise in Bussen, U-Bahnzugängen oder dergleichen wieder, bei denen kontaktlose Tickets oder Kreditkarten vor das Terminal gehalten werden. Diese Terminals stehen beispielsweise im öffentlichen Personennahverkehr. Wenn ein Monatsticket oder eine Kreditkarte in den Erfassungsbereich des Kartenlesers gebracht wird, wird erfasst, welche Karte vorgehalten wird. Die Abrechnung kann beispielsweise über eine Monatsabrechnung erfolgen oder über eine Kreditkartenabrechnung oder über ein bestimmtes Geschäftsmodell, beispielsweise als proprietäre Lösung. Diese Lösung kann beispielsweise so aussehen, dass mehrere Fahrten mit einem Nahverkehrsmittel durchgeführt werden, dass jeweils beim Einsteigen in das Nahverkehrsmittel oder zum Öffnen eines Zuganges (zum Beispiel bei U-Bahnen) die Kreditkarte in den Erfassungsbereich des Kartenlesers gebracht wird und am Ende eines Abrechnungszeitraumes ermittelt wird, welche Abrechnung die günstigste ist, beispielsweise im Rahmen der Kosten eines Tagestickets, eines Wochentickets oder dergleichen. Der entsprechende Betrag wird beispielsweise von der Kreditkarte abgebucht.

In obigem Beispiel gehören kontaktlose Tickets zu geschlossenen Zahlungssystemen und Kreditkarten zu offenen Zahlungssystemen.

Aus der Praxis ist bekannt, die Verwaltung beider Systeme in einer einzigen Applikation durchzuführen. Wie schon ausgeführt, muss in diesem Fall die Applikation vollständig einer Sicherheitszertifizierung unterworfen werden. Dies ist erforderlich, da die offenen Zahlungssysteme wie beispielsweise Kreditkartensysteme hohe Anforderungen an die Sicherheit stellen.

Dies hat verschiedene Nachteile. Zum einen ist die Sicherheitszertifizierung sehr aufwendig. Zum anderen kann an der Applikation für das geschlossene Zahlungssystem keine Änderung vorgenommen werden, ohne nicht eine kostspielige und aufwendige Zertifizierung durchzuführen.

Will man diese Nachteile vermeiden, so sind die beiden Applikationen zu trennen, zum Beispiel indem die Applikation für offene Zahlungssysteme mittels ihrer Zugriffssteuerungseinheit für Karten der Applikation für geschlossene Zahlungssysteme einen Kommunikationskanal zu entsprechenden Karten zur Verfügung stellt.

Die aus der Praxis bekannten Systeme weisen den Nachteil auf, dass die Kommunikation mittels eines solchen Kanals über die Zugriffssteuerungseinheit für Karten einer zweiten Applikation relativ langsam ist. Da die Kommunikation mehrere Kommandos an die jeweils im Erfassungsbereich des Kartenlesers befindlichen Karte erfordert, führt es in der Praxis zu Problemen, wenn die Kommunikation mit der Karte beispielsweise eine Zeitspanne von mehr als 120 Millisekunden dauert.

Die Verbindung zwischen dem Kartenleser, der Zugriffssteuerungseinheit für Karten und der Verarbeitungseinheit für geschlossene Zahlungssysteme oder der Verarbeitungseinheit für offene Zahlungssysteme kann durch die langsame Kommunikation in ihrer Stabilität negativ beeinflusst werden, so dass ein Erfassungsvorgang und die Kommunikation unterbrochen werden können, wodurch die Verarbeitung unter Umständen wiederholt werden muss.

Aus diesem Grunde ist es vorteilhaft, die Dauer der Verarbeitung einer Karte und die Kommunikation auf ein Minimum zu reduzieren, beispielsweise nicht länger als 100 Millisekunden.

Das der vorliegenden Erfindung zugrunde liegende technische Problem besteht darin, ein Verfahren anzugeben, mit dem eine schnelle Verarbeitung wahlweise einer Karte eines offenen Zahlungssystemes oder einer Karte eines geschlossenen Zahlungssystems möglich ist und eine Trennung der Applikation für offene Zahlungssystem und der Applikation für geschlossene Zahlungssysteme soweit möglich ist, dass eine Sicherheitszertifizierung der Applikationen unabhängig voneinander erfolgen kann.

Dieses technische Problem wird durch ein Verfahren mit den Merkmalen gemäß Anspruch 1 gelöst.

Das erfindungsgemäße Verfahren zur Durchführung bargeldloser Zahlungsvorgänge mit Karten von geschlossenen und offenen Zahlungssystemen zeichnet sich dadurch aus,
- dass eine Zugriffssteuerungseinheit für Karten mittels wenigstens eines Kartenlesers erfasst, ob eine Karte eines offenen oder eines geschlossenen Zahlungssystemes in einem Erfassungsbereich des Kartenleser angeordnet ist,
- dass die Zugriffssteuerungseinheit unmittelbar oder mittelbar entweder einen direkten Kommunikationskanal zwischen dem wenigstens einen Kartenleser und einer Verarbeitungseinheit für geschlossene Zahlungssysteme oder einen direkten Kommunikationskanal zwischen dem wenigstens einen Kartenleser und einer Verarbeitungseinheit für offene Zahlungssysteme freischaltet und/oder abschaltet
- und dass die Verarbeitungseinheit für geschlossene Zahlungssysteme und die Verarbeitungseinheit für offene Zahlungssysteme in voneinander getrennten Prozessen arbeiten.

Das erfindungsgemäße Verfahren weist den Vorteil auf, dass die Kommunikation direkt zwischen dem wenigstens einen Kartenleser und einer Verarbeitungseinheit für geschlossene Zahlungssysteme oder einer Verarbeitungseinheit für offene Zahlungssysteme erfolgt, wodurch eine schnelle Kommunikation möglich ist, da die eigentliche Kommunikation nicht mehr über die Zugriffssteuerungseinheit erfolgt. Dies kann beispielsweise realisiert werden, indem eine Applikation direkten Zugriff auf den Gerätetreiber erhält, der den Kartenleser steuert.

Darüber hinaus weist das erfindungsgemäße Verfahren den Vorteil auf, dass die Verarbeitungseinheit für geschlossene Zahlungssysteme und die Verarbeitungseinheit für offene Zahlungssysteme in voneinander getrennten Prozessen arbeiten. Hierdurch ist es möglich die Sicherheitszertifizierung auf die Applikation für offene Zahlungssysteme zu beschränken.

Die Zugriffssteuerungseinheiten für Karten kommunizieren mittelbar oder unmittelbar mit dem Kartenleser. Bei der mittelbaren Kommunikation ist zusätzlich ein Sicherheitsmodul vorgesehen. Dieses Sicherheitsmodul schaltet vorteilhaft die Kommunikationskanäle frei oder ab. Dies kann beispielweise unter Linux mithilfe von Linux Security Modules (LSM) realisiert werden, die im Linux Framework ("Linux Security Framework" von Chris Wright and Crispin Cowan, Stephen Smalley, James Morris, Greg Kroah-Hartman) (Linux - eingetragene Marke von Linus Torvalds, USA) enthalten sind.

Die Zugriffssteuerungseinheit für Karten kommuniziert vorteilhaft ständig mit dem Kartenleser und schickt Signale an den Kartenleser, um zu erfassen, ob und wann sich eine Karte in dem Erfassungsbereich des Kartenlesers befindet. Erfasst der Kartenleser eine Karte, prüft die Zugriffssteuerungseinheit, ob es sich um eine Karte eines geschlossenen Zahlungssystemes oder eines offenen Zahlungssystemes handelt. Die Zugriffssteuerungseinheit für Karten unterstützt sämtliche Arten von Karten.

Erkennt die Zugriffssteuerungseinheit für Karten eine Karte eines geschlossenen Zahlungssystems, schaltet die Zugriffssteuerungseinheit oder das Sicherheitsmodul einen direkten Kommunikationskanal zwischen dem Kartenleser und der Verarbeitungseinheit für geschlossene Zahlungssysteme frei. Es handelt sich hierbei um eine direkte Kommunikation, die nicht mehr über die Zugriffssteuerungseinheit für Karten läuft. Hierdurch ist die Kommunikation deutlich schneller.

Handelt es sich um eine Karte eines offenen Zahlungssystems, die im Erfassungsbereich des Kartenlesers angeordnet ist, schaltet die Zugriffssteuerungseinheit für Karten einen direkten Kommunikationskanal zu der Verarbeitungseinheit für offene Zahlungssysteme frei. Auch hier erfolgt die Kommunikation nicht über die Zugriffssteuerungseinheit für Karten, sondern unmittelbar. Auch hierdurch wird die benötigte Zeit für die Kommunikation erheblich verkürzt.

Gemäß einer vorteilhaften Ausführungsform der Erfindung ist vorgesehen, dass ein zwischen der Zugriffssteuerungseinheit für Karten und dem Kartenleser vorgesehenes Sicherheitsmodul von der Zugriffssteuerungseinheit angesteuert wird und dass das Sicherheitsmodul gemäß der Ansteuerung Kommunikationskanäle freischaltet oder abschaltet.

Das Sicherheitsmodul hat die Aufgabe, den Zugriff von Applikationen auf den Kartenleser zu steuern. Das Sicherheitsmodul wird von der Zugriffssteuerungseinheit gesteuert. Eine Applikation, die eine Verarbeitungseinheit für offene Zahlungssysteme oder eine andere Applikation, eine Verarbeitungseinheit für geschlossene Zahlungssysteme beinhaltet, erhält von der Zugriffssteuerungseinheit über das Sicherheitsmodul vorteilhaft direkten und exklusiven Zugriff auf den Kartenleser, um mit der Karte kommunizieren zu können, ohne dass andere Applikationen die Verarbeitung stören können. Vorteilhaft hat die Zugriffssteuerungseinheit für Karten immer privilegierten Zugriff entweder unmittelbar auf den Kartenleser oder über das Sicherheitsmodul auf den Kartenleser. Dieser privilegierte Zugriff ermöglicht es der Zugriffssteuerungseinheit, einzelnen Applikationen Zugriff auf eine Karte zu geben und diesen Zugriff wieder zu entziehen, indem sie selbst den direkten Kommunikationskanal freischaltet oder abschaltet oder indem sie das Sicherheitsmodul steuert, welches den direkten Kommunikationskanal freischaltet oder abschaltet. Der Zugriff kann soweit eingeschränkt werden, dass eine Suche nach weiteren Karten nicht möglich ist, so dass die Kommunikation auf die Karte beschränkt bleibt, die der Applikation von der Zugriffssteuerungseinheit übergeben wurde. Das Aktivieren und Deaktivieren verschiedener Technologien zur Suche nach Karten und weitere privilegierte Funktionen stehen nur der Zugriffssteuerungseinheit zur Verfügung.

Gemäß einer vorteilhaften Ausführungsform der Erfindung ist es grundsätzlich möglich, dass mehrere Applikationen die gleichen Arten von Karten anfordern. In diesem Fall kann die Karte zuerst der Applikation mit der höchsten Priorität übergeben werden. Die Applikation hat nun die Möglichkeit, die Karte zu bearbeiten oder diese wieder freizugeben, so dass die Zugriffssteuerungseinheit die Karte an eine weitere Applikation zur Verarbeitung übergeben kann.

Zudem ist es gemäß einer vorteilhaften Ausführungsform der Erfindung grundsätzlich möglich, verschiedene Arten von Karten anhand von kartenspezifischen Merkmalen genauer zu unterscheiden, so dass Applikationen nur Karten mit gewissen Merkmalen anfordern können. Beispielsweise lassen sich Anwendungen verschiedener Karten für offene Zahlungssysteme oder Mifare DESFire (DESFire - eingetragene Marke der NXP B.V., Niederlande) über sogenannte Application Identifier unterscheiden.

Sofern zum Beispiel eine Applikation eine Karte mit einem bestimmten Application Identifier anfordert, muss sichergestellt werden, dass nur Operationen im Kontext der entsprechenden Kartenapplikation ausgeführt werden können. Zu diesem Zweck muss auf Protokollebene, zum Beispiel ISO/IEC 7816-4 (INTERNATIONAL STANDARD, Second edition 2005-01-15, Identification cards - Integrated circuit cards, Part 4: Organization, security and commands for interchange), verhindert werden, dass die Applikation eine andere Kartenapplikation selektieren kann.

Gemäß einer weiteren vorteilhaften Ausführungsform der Erfindung ist vorgesehen, dass die Zugriffssteuerungseinheit für Karten bei Erfassen einer Karte eines offenen Zahlungssystems die Verarbeitungseinheit für offene Zahlungssysteme informiert, dass eine Karte für offene Zahlungssysteme anwesend ist, ein Kommunikationskanal freigeschaltet wurde und die Verarbeitungseinheit für offene Zahlungssysteme nun mittels dieses Kanals Kommandos zur Karte senden und von dieser Antworten empfangen kann.

Durch diese Ausführungsform der Erfindung erfolgt eine direkte Kommunikation zwischen dem Kartenleser und der Verarbeitungseinheit für offene Zahlungssysteme, wodurch die Kommunikation zeitlich erheblich verkürzt wird.

Gemäß einer weiteren vorteilhaften Ausführungsform der Erfindung ist vorgesehen, dass die Zugriffssteuerungseinheit für Karten bei Erfassen einer Karte eines geschlossenen Zahlungssystems die Verarbeitungseinheit für geschlossene Zahlungssysteme informiert, dass eine Karte für geschlossene Zahlungssysteme anwesend ist, ein Kommunikationskanal freigeschaltet wurde und die Verarbeitungseinheit für geschlossene Zahlungssysteme nun mittels dieses Kanals Kommandos zur Karte senden und von dieser Antworten empfangen kann.

Auch hierdurch wird bei der Kommunikation mit einer Verarbeitungseinheit für geschlossene Zahlungssysteme eine unmittelbare Kommunikation zwischen dem Kartenleser und der Verarbeitungseinheit durchgeführt, wodurch ebenfalls erheblich Zeit in der Kommunikation gespart wird.

Eine weitere vorteilhafte Ausführungsform der Erfindung sieht vor, dass nach Abschluss einer Transaktion die Verarbeitungseinheit für offene Zahlungssysteme oder die Verarbeitungseinheit für geschlossene Zahlungssysteme die Zugriffsteuerungseinheit für Karten über den Abschluss der Transaktion informiert. Hierdurch ist es möglich, dass die Zugriffssteuerungseinheit für Karten den Kommunikationskanal abschaltet und dem Kartenleser Kommandos schickt, um zu überprüfen ob sich die Karte noch im Erfassungsbereich des Kartenlesers befindet.

Eine weitere vorteilhafte Ausführungsform der Erfindung sieht vor, dass der Kommunikationskanal von der Zugriffssteuerungseinheit für Karten oder dem Sicherheitsmodul abgeschaltet wird. Je nachdem, ob ein Sicherheitsmodul vorhanden ist, wird der nach Abschluss einer Transaktion nicht mehr benötigte Kommunikationskanal abgeschaltet, um eine neue Transaktion vornehmen zu können.

Gemäß einer weiteren vorteilhaften Ausführungsform der Erfindung ist vorgesehen, dass die Zugriffssteuerungseinheit für Karten oder das Sicherheitsmodul durch mehrfaches Ansprechen des Kartenlesers überprüfen, ob die Karte aus dem Erfassungsbereich, beispielsweise dem Funkfeld des Kartenlesers, entfernt wird. Wird das Entfernen der Karte erkannt, kann eine neue Karte erfasst werden, so dass wiederum die Kommunikation zwischen dem Kartenleser und der Verarbeitungseinheit für geschlossene oder offene Zahlungssysteme freigeschaltet werden kann.

Eine weitere vorteilhafte Ausführungsform der Erfindung sieht vor, dass der Kartenleser periodisch Kommandos sendet, um die Anwesenheit einer Karte zu erfragen. Erhält der Kartenleser beispielsweise auf drei aufeinander folgenden ausgesendeten Kommandos keine Antwort, geht der Kartenleser davon aus, dass sich keine Karte im Erfassungsbereich des Kartenlesers befindet.

Vorteilhaft ist vorgesehen, dass der Kartenleser die Zugriffssteuerungseinheit für Karten informiert, wenn eine Karte entfernt wurde oder wenn eine Karte in den Erfassungsbereich des Kartenlesers gebracht wurde. Hierdurch hat die Zugriffssteuerungseinheit die Möglichkeit, die direkten Kommunikationskanäle freizuschalten oder abzuschalten. Die Kommunikation kann auch über das Sicherheitsmodul erfolgen.

Bei den Karten offener Zahlungssysteme können verschiedene Karten zur Anwendung kommen, wie beispielsweise MasterCard (eingetragene Marke der MasterCard International Incorporated, USA), Visa und dergleichen. Vorteilhaft werden die Daten der Karten der offenen Zahlungssysteme verschlüsselt übertragen. Dies entspricht den Anforderungen der offenen Zahlungssysteme.

Gemäß einer vorteilhaften Weiterbildung der Erfindung werden Schlüssel für eine sichere Übertragung von Daten der Karten der offenen Zahlungssysteme genutzt, die in einem kryptographischen Dienst mit Schlüsselspeicher geschützt werden. Mit den vom Schlüsselspeicher genutzten Schlüsseln werden die Daten verschlüsselt und erst die verschlüsselten Daten werden weitergeleitet, so dass die sensitiven Daten ausschließlich in verschlüsselter Form übertragen werden.

Gemäß einer weiteren vorteilhaften Ausführungsform der Erfindung ist vorgesehen, dass eine Applikation mit der Verarbeitungseinheit für offene Zahlungssysteme und einer Geschäftslogik für offene Zahlungssysteme und der Verschlüsselungseinheit zur Anbindung an ein Hintergrundsystem als sicherheitszugelassene Applikation mit der Zugriffssteuerungseinheit für Karten oder dem Sicherheitsmodul kommuniziert und dass ein Applikationsserver mit der Zugriffssteuerungseinheit für Karten als sicherheitszugelassener Applikationsserver mit dem Kartenleser und/oder dem Sicherheitsmodul kommuniziert. Die Zugriffssteuerungseinheit für Karten synchronisiert und kontrolliert den Zugriff auf Karten und bietet den Applikationen eine Schnittstelle, um Karten verschiedener Arten anzufordern. Applikationen können zur Laufzeit verschiedene Arten von Karten anfordern und die Anforderungen jederzeit wieder zurücknehmen. Die Zugriffssteuerungseinheit übersetzt die Art der Karte in Technologien, die dieser Art von Karte entsprechen und aktiviert die Suche nach Karten dieser Technologien im Kartenleser. Bei dieser Ausführungsform wird die Applikation mit der Verarbeitungseinheit für offene Zahlungssysteme und der Geschäftslogik für offene Zahlungssysteme und der Verschlüsselungseinheit zur Anbindung an ein Hintergrundsystem sicherheitszertifiziert, ebenso wie der Applikationsserver mit der Zugriffssteuerungseinheit für die Karte.

Eine andere vorteilhafte Ausführungsform der Erfindung sieht vor, dass eine Applikation mit einer Geschäftslogik für offene Zahlungssysteme und der Verschlüsselungseinheit zur Anbindung an ein Hintergrundsystem als sicherheitszugelassene Applikation mit der Zugriffssteuerungseinheit für Karten oder dem Sicherheitsmodul kommuniziert und dass der Applikationsserver mit der Zugriffssteuerungseinheit für Karten und die Verarbeitungseinheit für offene Zahlungssysteme als sicherheitszugelassener Applikationsserver mit dem Kartenleser oder Sicherheitsmodul kommuniziert. Gemäß dieser Ausführungsform ist die Verarbeitungseinheit für offene Zahlungssysteme in dem Applikationsserver enthalten, in der auch die Zugriffssteuerungseinheit für die Karte angeordnet ist. Dieser Applikationsserver wird sicherheitszertifiziert. Zudem ist in der Applikation die Geschäftslogik für offene Zahlungssysteme und die Verschlüsselungseinheit zur Anbindung an ein Hintergrundsystem vorgesehen. Auch diese Applikation wird sicherheitszertifiziert.

Eine dritte vorteilhafte Ausführungsform sieht vor, dass eine Applikation mit der Geschäftslogik für offene Zahlungssysteme und der Nachrichtenformatierungseinheit zur Anbindung an das Hintergrundsystem als nicht sicherheitszertifizierte Applikation mit der Zugriffssteuerungseinheit für Karten oder dem Sicherheitsmodul kommuniziert und dass der Applikationsserver mit der Zugriffssteuerungseinheit für Karten und die Verarbeitungseinheit für offene Zahlungssysteme und die Verschlüsselungseinheit zur Anbindung an das Hintergrundsystem als sicherheitszertifizierter Applikationsserver mit dem Kartenleser und/oder dem Sicherheitsmodul kommuniziert.

Diese Ausführungsform weist den Vorteil auf, dass die Applikation mit der Geschäftslogik für offene Zahlungssysteme und der Nachrichtenformatierungseinheit zur Anbindung an das Hintergrundsystem nicht mehr zertifiziert werden muss, da hier keine sensitiven Daten im Klartext vorhanden sind, die verschlüsselt werden müssten. Die Daten im Klartext sind ausschließlich in dem Applikationsserver mit der Zugriffssteuerungseinheit, der Verarbeitungseinheit für offene Zahlungssysteme und der Verschlüsselungseinheit zur Anbindung an das Hintergrundsystem angeordnet, so dass nur dieser Applikationsserver sicherheitszertifiziert werden muss.

Im folgenden Beispiel soll ein Zahlungsvorgang mit einer Karte eines offenen Zahlungssystems beschrieben werden.

Als erstes erfolgt eine Kommunikation des Kartenlesers mit der Zugriffssteuerungseinheit. Handelt es sich um eine Karte eines offenen Zahlungssystems, ist dies ein Fall für die Applikation für offene Zahlungssysteme. Die Zugriffssteuerungseinheit erlaubt eine direkte Kommunikation mit der Karte des offenen Zahlungssystems. Es erfolgen nur bestimmte Anfragen und es wird nur der Kommunikationskanal zu dieser Karte freigeschaltet, so dass ausschließlich der Datenaustausch für die Bezahltransaktion erfolgen kann. Die Zugriffssteuerungseinheit aktiviert die Karte, damit die Applikation für offene Zahlungssysteme mit dieser kommunizieren kann. Die Kommunikation erfolgt sehr zeitsparend, da eine direkte Kommunikation zwischen der Verarbeitungseinheit für offene Zahlungssysteme und der Karte erfolgt.

Im nächsten Beispiel wird eine Karte eines geschlossenen Zahlungssystems verwendet.

Die Zugriffssteuerungseinheit erkennt eine Karte eines geschlossenen Zahlsystems und schaltet einen direkten Kommunikationskanal für die entsprechende Applikation frei. Die Applikation für geschlossene Zahlungssysteme prüft, ob es sich beispielsweise um eine Karte eines Personennahverkehrverbundes handelt, ob diese gültig ist, wann ein Mitfahrer eingestiegen ist usw.. Es erfolgt von dem geschlossenen Zahlungssystem noch eine Übertragung der Daten an das Hintergrundsystem, damit dieses die Daten auswerten und beispielsweise Guthaben von der Karte abbuchen kann.

Eine weitere vorteilhafte Ausführungsform der Erfindung beinhaltet einen Kommunikationsserver, um ein dynamisches System zur Verfügung zu stellen, bei dem Clients sich registrieren können, um entsprechende Nachrichten auszutauschen. So registriert sich beispielsweise die Zugriffssteuerungseinheit für Karten, die Verarbeitungseinheit für offene Zahlungssysteme und die Zugriffssteuerungseinheit für die Benutzerschnittstelle. Über diesen Kommunikationsserver fragt die Geschäftslogik des offenen Zahlungssystems an, ob es eine Verarbeitungseinheit für offene Zahlungssysteme gibt. Auf gleiche Weise fragt die Verarbeitungseinheit des geschlossenen Zahlungssystems an, ob es eine Zugriffssteuerungseinheit für Karten gibt. Der Kommunikationsserver vermittelt zwischen diesen Komponenten.

Dem Kommunikationsserver wird ein Protokoll zugrundegelegt. Gemäß einer vorteilhaften Ausführung handelt es sich um eine Standardschnittstelle.

Gemäß einer weiteren vorteilhaften Ausführungsform ist der Kommunikationsserver mit dem kryptographischen Dienst mit Schlüsselspeicher kombiniert. Da die Kommunikation im Kontext kryptographischer Operationen erfolgt, wird eine generische Schnittstelle für kryptographische Token verwendet, die im Public-Key Cryptography Standard Teil 11 (PKCS #11) beschrieben ist. Diese Schnittstelle bietet Basismechanismen und die Möglichkeit spezifischer Erweiterungen. Zudem wird diese Schnittstelle bereits für den kryptographischen Dienst mit Schlüsselspeicher genutzt. Daher wird der Kommunikationsserver zum Weiterleiten der Nachrichten gemeinsam mit dem bestehenden Schlüsselspeicher in einem Prozess realisiert. Die Anmeldung der Clients erfolgt mittels neuer Hardware Feature Objekte, die bereits im Standard definiert sind. Durch die Verwendung einer standardisierten Schnittstelle stehen dem Programmierer von Applikationen fertige Bibliotheken und Programme der Basismechanismen dieser Schnittstelle zur Verfügung. Die Schnittstelle ist Programmierern für den Zugriff auf den kryptographischen Dienst mit Schlüsselspeicher bereits bekannt.

Es besteht jedoch auch die Möglichkeit, einen anderen Kommunikationsserver unabhängig vom kryptographischen Dienst mit Schlüsselspeicher vorzusehen.

Gemäß einem bevorzugten Ausführungsbeispiel erfolgt die Verschlüsselung der sensitiven Daten, beispielsweise der Zahlungskartennummer, im Applikationsserver. Das heißt, dass die Verschlüsselungseinheit zur Anbindung an das Hintergrundsystem im Applikationsserver integriert ist. Damit sind in der Applikation für offene Zahlungssysteme zu keinem Zeitpunkt unverschlüsselte sensitive Daten vorhanden, so dass eine Zertifizierung nicht erforderlich ist. Es werden durch diese Applikation nur noch verschlüsselte oder nicht sensitive Daten weitergeleitet.

Aus der Praxis ist bekannt, dass die Daten in Nachrichten formatiert werden müssen, die das Hintergrundsystem versteht. Je nach Art des Hintergrundsystems sind spezifische Formatierungen erforderlich. Dies betreffen auch Teile der sensitiven Daten, die verschlüsselt werden müssen. Zum Beispiel erfolgt ein Padding, das bedeutet, dass Anhänge vor der Verschlüsselung mit Fülldaten vergrößert werden.

Gemäß einem bevorzugten Ausführungsbeispiel stehen im Applikationsserver mehrere Verschlüsselungseinheiten zur Anbindung an das Hintergrundsystem zur Verfügung. Diese formatieren sensitive Daten in Nachrichten, die das jeweilige Hintergrundsystem versteht, und verschlüsseln diese formatierten Nachrichten nach einem Schema, das das jeweilige Hintergrundsystem versteht. Die Geschäftslogik für offene Zahlungssysteme teilt der Verarbeitungseinheit für offene Zahlungssysteme mit, welche Verschlüsselungseinheit zur Anbindung an das Hintergrundsystem verwendet werden soll.

Die Nachrichtenformatierungseinheit arbeitet nach einem definierten Nachrichtenformat, das beispielsweise festlegt, in welcher Reihenfolge die Daten übertragen werden sollen. Handelt es sich um die Daten 1, 2, 3, 4, kann es sein, dass der Netzbetreiber des Hintergrundsystems zur Abwicklung von Transaktionen die Daten in der Reihenfolge 3, 1, 2, 4 übermittelt haben möchte. Die verschlüsselten Daten und die nicht sensitiven Daten werden also an die Nachrichtenformatierungseinheit geschickt, von dieser in der richtigen Reihenfolge angeordnet und dem Netzbetreiber zugeleitet.

Karten im Sinne der Erfindung sind Karten von Zahlungssystemen wie Kreditkarten oder EC-Karten, Tickets und dergleichen. Es können kontaktlose und kontaktbehaftete Erfassungssysteme vorgesehen sein.

Unter Geschäftslogik wird beispielsweise die Abbuchung oder das Runterzählen von Guthaben und Fahrten oder das Ausrechnen der günstigsten Tarife verstanden.

Weitere Merkmale und Vorteile der Erfindung ergeben sich anhand der zugehörigen Zeichnung, in der mehrere Ausführungsbeispiele des erfindungsgemäßen Verfahrens nur beispielhaft dargestellt sind. In der Zeichnung zeigen:
- Fig. 1: eine Ausführungsform gemäß dem Stand der Technik;
- Fig. 2: ein erstes Ausführungsbeispiel des erfindungsgemäßen Verfahrens;
- Fig. 3: ein zweites Ausführungsbeispiel des erfindungsgemäßen Verfahrens;
- Fig. 4: ein Ablaufdiagramm zur Erkennung einer Karte;
- Fig. 5: ein weiteres Ausführungsbeispiel mit einem Sicherheitsmodul;
- Fig. 6: ein geändertes Ausführungsbeispiel;
- Fig. 7: ein geändertes Ausführungsbeispiel;
- Fig. 8: ein geändertes Ausführungsbeispiel;
- Fig. 9: ein geändertes Ausführungsbeispiel;
- Fig. 10: eine Zugriffssteuerung für eine Benutzerschnittstelle.

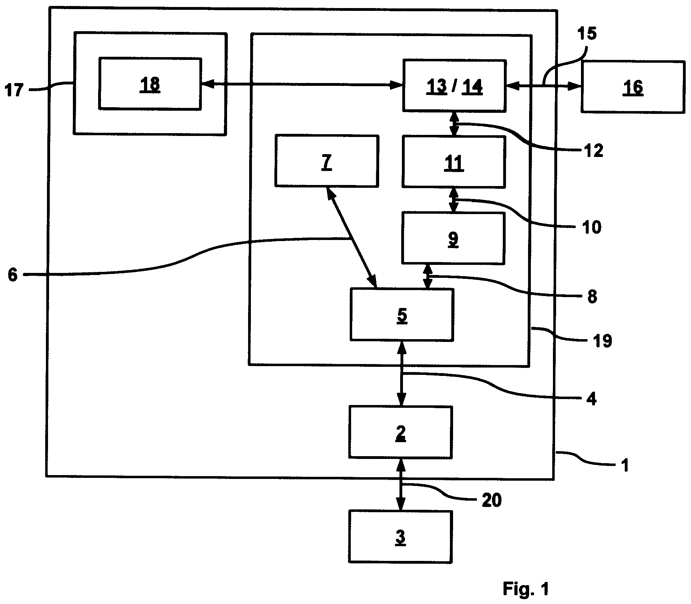

Fig. 1 zeigt ein Zahlterminal 1, welches zum Stand der Technik gehört.

Das Zahlterminal 1 weist einen Kartenleser 2 auf, in dessen Erfassungsbereich eine Karte 3 gebracht wird. Der Kartenleser 2 kommuniziert über einen Kommunikationskanal 4 mit einer Zugriffssteuerungseinheit 5 für Karten. Die Zugriffssteuerungseinheit 5 kommuniziert entweder über einen Kanal 6 mit einer Verarbeitungseinheit und Geschäftslogik 7 für geschlossene Zahlungssysteme oder über einen Kanal 8 mit einer Verarbeitungseinheit 9 für offene Zahlungssysteme. Die Verarbeitungseinheit 9 kommuniziert wiederum über einen Kanal 10 mit einer Geschäftslogik 11 für offene Zahlungssysteme, die über einen Kanal 12 mit einer Nachrichtenformatierungseinheit 13 zur Anbindung an das Hintergrundsystem kommuniziert. Gleichzeitig ist eine Verschlüsselungseinheit 14 zur Anbindung an das Hintergrundsystem vorgesehen. Die Kommunikation mit einem Netzbetreiber 16 des Hintergrundsystems zur Abwicklung von Transaktionen erfolgt über einen Kommunikationskanal 15. Die Verschlüsselungseinheit 14 verschlüsselt die Daten mittels eines Schlüssels, der in einem Kommunikationsserver 17 in einem kryptographischen Dienst 18 mit Schlüsselspeicher abgespeichert ist. Das Zahlterminal 1 besteht im Wesentlichen aus einer Applikation 19, die Transaktionen mit Hilfe der Verarbeitungseinheit 9 für offene Zahlungssysteme durchführt und die Geschäftslogik 11 umsetzt. Für die Anbindung des Terminals 1 an Hintergrundsysteme 16 zur Abwicklung von Transaktionen werden kryptographische Schlüssel benötigt, die in einem Schlüsselspeicher 18 des Terminals 1 von einer zertifizierten Firmware geschützt und von der Applikation 19 lediglich benutzt werden können. Die Kommunikation mit der Karte 3 eines Zahlungssystems erfolgt über den Kartenleser 2.

Die Applikation 19 hat gemäß dem Stand der Technik Zugriff auf den Kartenleser 2 und kann die sensitiven Daten einer Karte 3, wie beispielsweise eine Zahlungskartennummer auslesen und verarbeiten. Daher muss die Applikation 19 sicherstellen, dass sensitive Daten das Terminal 1 nie im Klartext verlassen. Aufgrund dieser Anforderung ist die Applikation 19 im Geltungsbereich entsprechender Sicherheitszertifizierungen. Für die Akzeptanz von Karten 3 offener und geschlossener Zahlungssysteme an dem Terminal 1 ist es erforderlich, festzustellen, welche Karte vorliegt, um die Karte 3 gemäß des vorliegenden Zahlungssystems zu verarbeiten.

Da der direkte Zugriff auf den Kartenleser 2 zu einem bestimmten Zeitpunkt nur von einer Verarbeitungseinheit 7, 9 für offene oder geschlossene Systeme möglich ist, muss die Verarbeitung aller Karten 3 in einer Applikation 19 erfolgen. Damit ist jedoch die gesamte Applikation 19 Teil der Sicherheitszertifizierung für das offene Zahlungssystem. Das bedeutet, dass auch Änderungen der Verarbeitungseinheit und Geschäftslogik 7 für das geschlossene Zahlungssystem eine erneute Sicherheitszertifizierung für das offene Zahlungssystem erfordern. Zudem erhöht sich das Risiko einer Sicherheitslücke aufgrund der erhöhten Komplexität der Applikation 19.

Die Kommunikation zwischen der Karte 3 und dem Kartenleser 2 erfolgt über den Kommunikationskanal 20 kontaktlos oder kontaktbehaftet.

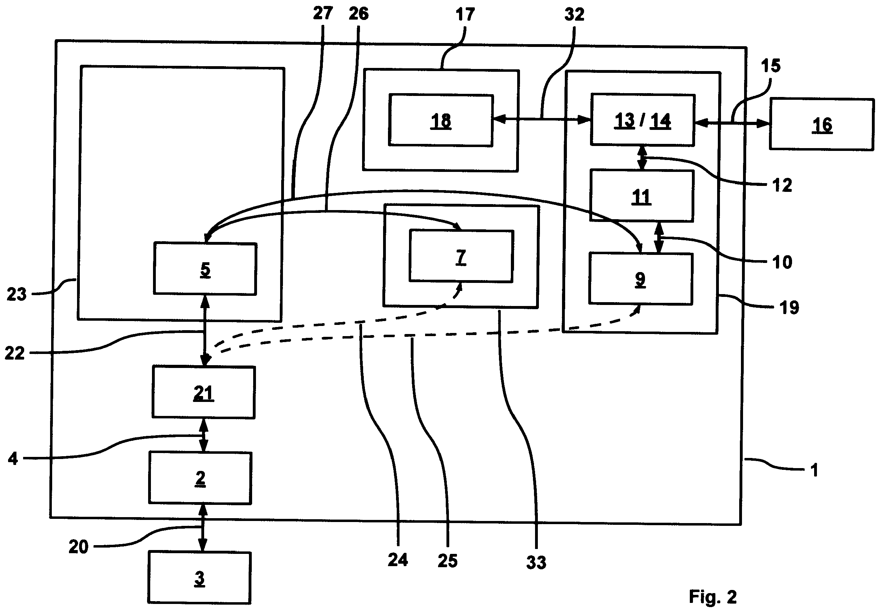

Fig. 2 zeigt eine erste erfindungsgemäße Ausführungsform eines Terminals 1. Die Karte 3 wird von dem Kartenleser 2 erfasst. Über den Kommunikationskanal 4 erfolgt eine Kommunikation mit einem Sicherheitsmodul 21.

Das Sicherheitsmodul 21 kommuniziert über einen Kanal 22 mit der Zugriffssteuerungseinheit 5 für Karten.

Das bedeutet, dass Teile der Applikation in einem separaten Prozess unter Kontrolle der Firmware ausgeführt werden in einem Applikationsserver 23. Dazu gehört die Zugriffssteuerungseinheit 5 für Karten und die Zugriffssteuerungseinheit für die Benutzerschnittstelle (in Fig. 2 nicht dargestellt).

Gemäß Fig. 2 erfolgt die Kommunikation der Zugriffssteuerungseinheit 5 über den Kanal 22 mit dem Sicherheitsmodul 21. Wird eine Karte 3 eines geschlossenen Zahlungssystems erkannt, wird ein Kommunikationskanal 24 von der Zugriffssteuerungseinheit 5 freigeschaltet. Die Kommunikation erfolgt nicht mehr über die Zugriffssteuerungseinheit 5, sondern unmittelbar zwischen der Verarbeitungseinheit und Geschäftslogik 7 für geschlossene Zahlungssysteme und einem Sicherheitsmodul 21 und damit dem Kartenleser 2, so dass eine erheblich verkürzte Kommunikationszeit vorhanden ist.

Wird eine Karte 3 eines offenen Zahlungssystems erkannt, wird der Kanal 25 von dem Sicherheitsmodul 21 aufgrund der Ansteuerung der Verarbeitungseinheit 5 freigeschaltet, so dass eine direkte Kommunikation zwischen der Verarbeitungseinheit 9 für offene Zahlungssystem und dem Sicherheitsmodul 21 und damit dem Kartenleser 2 durchgeführt werden kann.

Die Zugriffssteuerungseinheit 5 teilt der Verarbeitungseinheit 7 mit, wenn eine Karte 3 eines geschlossenen Kartensystems erkannt wird. Dies erfolgt über den Kanal 26. Ebenso erfolgt über einen Kanal 27 eine Mitteilung durch die Zugriffssteuerungseinheit 5 an die Verarbeitungseinheit 9, wenn eine Karte 3 eines offenen Zahlungssystems erkannt wird.

Für das geschlossene Zahlungssystem mit der Verarbeitungseinheit und Geschäftslogik 7 ist eine Applikation 33 vorgesehen. Für das offene Zahlungssystem mit der Verarbeitungseinheit 9 für offene Zahlungssysteme, der Geschäftslogik 11 und der Nachrichtenformatierungseinheit 13 zur Anbindung an das Hintergrundsystem und der Verschlüsselungseinheit 14 zur Anbindung an das Hintergrundsystem ist eine Applikation 19 vorgesehen.

Ein Kommunikationskanal (32) ist zwischen dem kryptografischen Dienst (18) mit Schlüsselspeicher und der Nachrichtenformatierungseinheit (13) zur Anbindung an das Hintergrundsystem (16) sowie der Verschlüsselungseinheit (14) zur Anbindung an das Hintergrundsystem (16) vorgesehen.

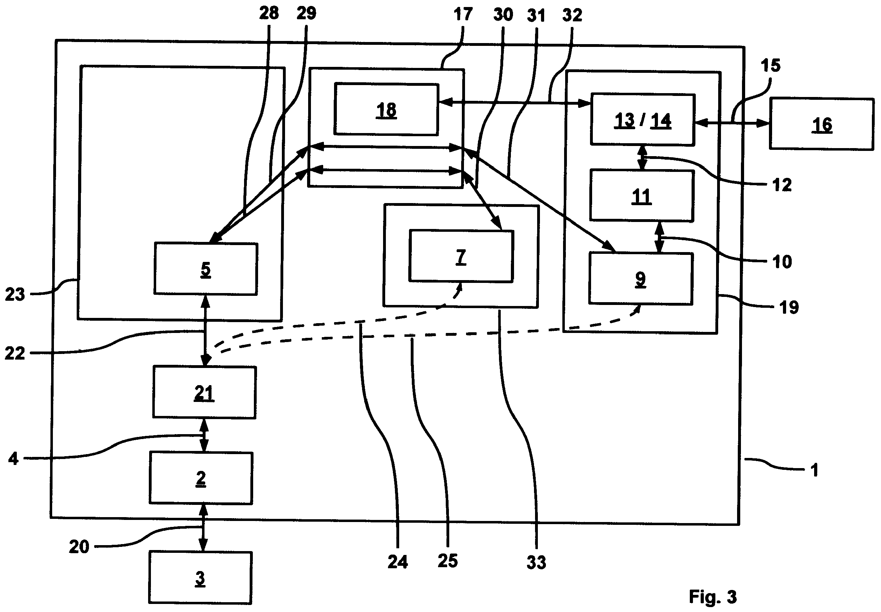

Fig. 3 zeigt ein weiteres Ausführungsbeispiel. Gleiche Teile sind mit gleichen Bezugszahlen versehen.

Gemäß dem vorliegenden Ausführungsbeispiel kommuniziert die Zugriffssteuerungseinheit 5 mit dem Kommunikationsserver 17 über die Kanäle 28, 29. Die Verarbeitungseinheit und Geschäftslogik 7 für geschlossene Zahlungssysteme meldet sich über den Kanal 30 bei dem Kommunikationsserver 17 an. Die Zugriffssteuerungseinheit 5 signalisiert über den Kanal 28 über den Kommunikationsserver 17, dass eine Karte 3 eines geschlossenen Zahlungssystems erkannt wurde. Die Verarbeitungseinheit 7 kommuniziert nach Freischaltung des direkten Kommunikationskanals 24 durch die Zugriffssteuerungseinheit 5 unmittelbar über das Sicherheitsmodul 21 mit dem Kartenleser 2. Ebenso meldet sich die Verarbeitungseinheit 9 für offene Zahlungssysteme über den Kanal 31 bei dem Kommunikationsserver 17 an. Die Zugriffssteuerungseinheit 5 meldet sich ebenfalls bei dem Kommunikationsserver 17 an.

Erkennt die Zugriffssteuerungseinheit 5 eine Karte 3 eines offenen Zahlungssystems, wird über das Sicherheitsmodul 21 der Kanal 25 als direkter Kommunikationskanal zwischen der Verarbeitungseinheit 9 und dem Sicherheitsmodul 21 und damit dem Kartenleser 2 freigeschaltet.

Die Zugriffssteuerungseinheit 5 für Karten synchronisiert und kontrolliert den Zugriff auf den Kartenleser 2 und bietet den Applikationen 19, 33 eine Schnittstelle, um Karten 3 verschiedener Arten anzufordern.

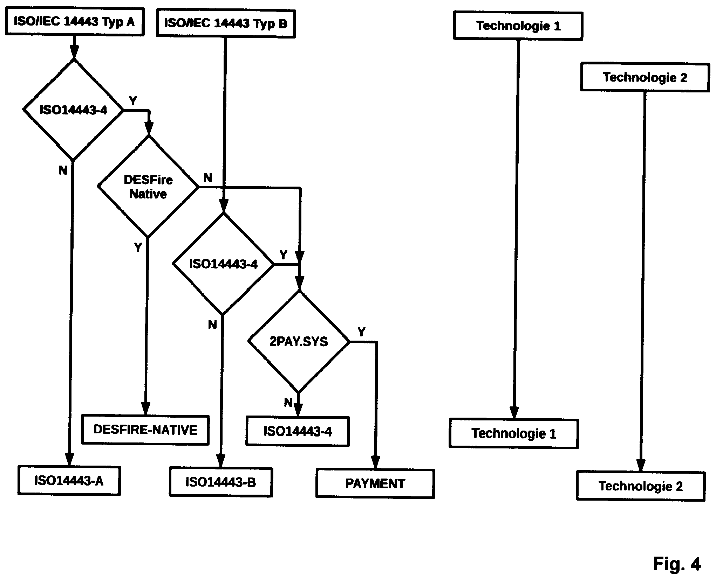

Gemäß Fig. 4 ist dargestellt, wie die Zugriffssteuerungseinheit 5 die Arten der Karte 3 in Technologien umsetzt. Zu den verschiedenen Arten gehören zum Beispiel Karten für offene Zahlungssysteme (Karten der Art PAYMENT), sowie Karten für geschlossene Zahlungssysteme wie Karten der Art DESFire-Native oder Karten nach den Standards IS014443-A, IS014443-B, ISO14443-4 (INTERNATIONAL STANDARD, ISO/IEC 14443-4, Second edition, 2008-07-15, Identification cards - Contactless integrated circuit cards - Proximity cards - Part 4: Transmission protocoll) oder anderen Technologien. Die Standards IS014443-A und IS014443-B sind in der IS014443-4 definiert. Applikationen 19, 33 können zur Laufzeit verschiedene Arten von Karten anfordern und die Anforderung jederzeit wieder zurücknehmen.

Die Zugriffssteuerungseinheit 5 übersetzt die Arten der Karte 3 in Technologien, die dieser Art von Karte 3 entsprechen und aktiviert die Suche nach Karten dieser Technologien im Kartenleser 2. Anhand des in Fig. 4 dargestellten Entscheidungsbaums erkennt die Zugriffssteuerungseinheit 5 die Art der Karte 3 und übergibt diese an die entsprechenden Applikationen 19, 33.

Mit der Übergabe der Karte 3 an die Applikationen 19, 33 werden der Applikation 19, 33 auch alle bereits gesammelten Daten der Karte 3 mitgeteilt.

Wie in Fig. 4 dargestellt, kann es sich bei einer Karte gemäß dem Standard ISO/IEC 14443 Typ A um eine Karte handeln, die zudem das Übertragungsprotokoll gemäß ISO/IEC 14443-4 unterstützt. Ist dies nicht der Fall, handelt es sich um eine Karte der Art IS014443-A. Wenn es sich um eine Karte handelt, die das Übertragungsprotokoll gemäß ISO/IEC 14443-4 unterstützt, kann es sich wiederum um eine Karte handeln, die zudem native Mifare DESFire Protokolle unterstützt. Im positiven Falle handelt es sich um eine Karte der Art DESFire-Native. Im negativen Fall kann es sich um eine Karte handeln, die eine Datei namens "2PAY.SYS" besitzt. Ist die Datei namens "2PAY.SYS" vorhanden, liegt eine Karte der Art PAYMENT vor, das heißt eine Karte eines offenen Zahlungssystems. Ist die Datei namens "2PAY.SYS" nicht vorhanden, ist es eine Karte der Art IS014443-4. Eine ISO/IEC 14443 Typ B Karte kann ebenfalls eine Karte sein, die das Übertragungsprotokoll gemäß ISO/IEC 14443-4 unterstützt. Ist dies nicht der Fall, ist es eine Karte der Art IS014443-B. Ist dies der Fall, gelangt man wieder in den schon beschriebenen Abzweig um zu überprüfen, ob es sich um eine Karte eines offenen Zahlungssystems handelt.

Bei Karten anderer Technologien, die lediglich beispielhaft als Technologie 1 und Technologie 2 dargestellt sind, erkennt die Zugriffssteuerungseinheit 5 unmittelbar die Art der Karte.

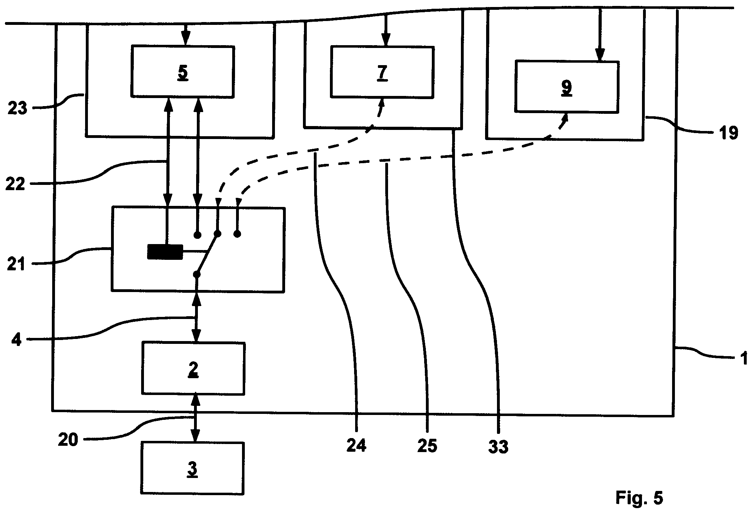

Gemäß Fig. 5 ist das Sicherheitsmodul 21, welches zwischen der Zugriffssteuerungseinheit 5 und dem Kartenleser 2 angeordnet ist, genauer dargestellt. Das Sicherheitsmodul 21 hat die Aufgabe, den Zugriff der Applikationen 19, 33 auf den Kartenleser 2 zu steuern. Das Sicherheitsmodul 21 wird von der Zugriffssteuerungseinheit 5 gesteuert. Die Applikation 19 oder 33 erhält von der Zugriffssteuerungseinheit über das Sicherheitsmodul 21 direkten und exklusiven Zugriff auf den Kartenleser 2, um mit der Karte 3 kommunizieren zu können, ohne dass andere Applikationen 33, 19 die Verarbeitung stören können. Die Zugriffssteuerungseinheit 5 für Karten hat immer privilegierten Zugriff via Sicherheitsmodul 21 auf den Kartenleser 2. Dieser privilegierte Zugriff ermöglicht es der Zugriffssteuerungseinheit 5, einzelnen Applikationen 19, 33 Zugriff auf eine Karte 3 zu geben und diesen Zugriff wieder zu entziehen, indem sie das Sicherheitsmodul 21 steuert. Der Zugriff kann soweit eingeschränkt werden, dass eine Suche nach weiteren Karten nicht möglich ist, so dass die Kommunikation auf die Karte 3 beschränkt bleibt, die der Applikation 19, 33 von der Zugriffssteuerungseinheit 5 übergeben wurde. Das Aktivieren und Deaktivieren verschiedener Technologien zur Suche einer Karte 3 und weitere privilegierte Funktionen stehen nur der Zugriffssteuerungseinheit 5 zur Verfügung.

Es besteht auch die grundsätzliche Möglichkeit, dass mehrere Applikationen die gleichen Arten von Karten 3 anfordern. In diesem Fall kann die Karte zuerst der Applikation mit der höchsten Priorität übergeben werden. Die Applikation hat nun die Möglichkeit, die Karte 3 zu bearbeiten oder diese wieder freizugeben, so dass die Zugriffssteuerungseinheit 5 die Karte 3 an eine weitere Applikation zur Verarbeitung übergeben kann.

Zudem ist es grundsätzlich möglich, verschiedene Arten von Karten 3 auf Kartenebene genauer zu unterscheiden, so dass Applikationen 19, 33 nur Karten 3 mit gewissen Merkmalen anfordern können. Beispielsweise lassen sich Anwendungen verschiedener Karten für offene Zahlungssysteme oder Mifare DESFire über so genannte Application Identifier unterscheiden.

Sofern zum Beispiel eine Applikation 19, 33 eine Karte 3 mit einem bestimmten Application Identifier anfordert, muss sichergestellt werden, dass nur Operationen im Kontext der entsprechenden Kartenapplikation ausgeführt werden können. Zu diesem Zweck muss auf Protokollebene, zum Beispiel ISO/IEC 7816-4, verhindert werden, dass die Applikation 19, 33 eine andere Kartenapplikation selektieren kann.

Zur Fig. 3 wird ein Beispiel im Folgenden genauer beschrieben:

Sobald das Terminal 1 mit Betriebsspannung versorgt wird, führt es eine Initialisierungssequenz durch. Der kryptographische Dienst 18 mit Schlüsselspeicher sowie die Zugriffssteuerungseinheit 5 für Karten werden initialisiert.

Als letzter Schritt der Initialisierungssequenz werden die Applikationen gestartet, gemäß Fig. 3 die Applikation 33 (Verarbeitungseinheit und Geschäftslogik 7 für geschlossene Zahlungssysteme) sowie die Applikation 19 (Verarbeitungseinheit 9 und Geschäftslogik 11 für offene Zahlungssysteme).

Die Applikation 33 initiiert eine Transaktion. Zu diesem Zweck registriert sie sich bei der Zugriffssteuerungseinheit 5 für Karten für die Kartenart DESFire-Native.

Die Zugriffssteuerungseinheit 5 vermerkt in einer Tabelle, dass die Applikation 33 für Karten der Art DESFire-Native registriert ist.

Die Zugriffssteuerungseinheit 5 für Karten veranlasst den Kartenleser 2 mittels des privilegierten Kanals 22 über das Sicherheitsmodul 21 nach Karten der Technologie ISO/IEC 14443 Typ A zu suchen. Wie aus Fig. 4 ersichtlich ist, verwenden Karten der Art DESFire-Native die Technologie ISO/IEC 14443 Typ A.

Gemäß Fig. 3 handelt es sich um einen kontaktlosen Kartenleser 2. Dieser aktiviert ein Funkfeld (nicht dargestellt) und sendet periodisch Kommandos, die die Anwesenheit der von Karten 3 der Technologie ISO/IEC 14443 Typ A erfragt.

Die Applikation 19 initiiert ebenfalls eine Transaktion. Zu diesem Zweck registriert sie sich bei der Zugriffssteuerungseinheit 5 für Karten der Art PAYMENT.

Die Zugriffsteuerungseinheit 5 vermerkt in einer Tabelle, dass die Applikation 19 für Karten der Art PAYMENT registriert ist.

Die Zugriffssteuerungseinheit 5 für Karten veranlasst den Kartenleser 2 mittels des privilegierten Kanals 22 über das Sicherheitsmodul 21 nach Karten der Technologie ISO/IEC 14443 Typ A und der Technologie ISO/IEC 14443 Typ B zu suchen. Wie aus Fig. 4 ersichtlich ist, verwenden Karten der Art PAYMENT entweder die Technologie ISO/IEC 14443 Typ A oder ISO/IEC 14443 Typ B. Da Karten der Art DESFire-Native ebenfalls die Technologie ISO/IEC 14443 Typ A verwenden, sind mit diesen beiden Technologien alle betroffenen Arten von Karten abgedeckt.

Der kontaktlose Kartenleser 2 beginnt periodisch abwechselnd Kommandos zu senden, die die Anwesenheit einer Karte der Technologie ISO/IEC 14443 Typ A oder ISO/IEC 14443 Typ B erfragen.

Im vorliegenden Beispiel präsentiert ein Kunde eine Karte 3 der Art PAYMENT, die die Technologie ISO/IEC 14443 Typ A verwendet.

Der Kartenleser 2 sendet das Kommando, um die Anwesenheit einer Karte der Technologie ISO/IEC 14443 Typ A zu erfragen. Die Karte 3 antwortet. Der Kartenleser 2 stoppt das periodische Senden von Kommandos zur Abfrage der Anwesenheit von Karten. Die Antwort der Karte 3 enthält weitere Identifizierungsmerkmale. Die Zugriffssteuerungseinheit 5 für Karten führt dann den in Fig. 4 gezeigten Entscheidungsprozess aus.

Der Entscheidungsprozess sieht folgendermaßen aus:
a) Aus den Identifizierungsmerkmalen der Karte ergibt sich, dass die Karte das ISO/IEC 14443-4 Übertragungsprotokoll unterstützt.
b) Mittels des Kartenleser 2 wird daraufhin ein Mifare DESFire native spezifisches Kommando zur Karte 3 geschickt, welches von dieser mit einem negativen Ergebnis beantwortet wird. Daraus wird geschlossen, dass es sich nicht um eine Karte der Art DESFire-Native handelt.
c) Mittels des Kanals 22 wird daraufhin über das Sicherheitsmodul 21 und den Kartenleser 2 ein Kommando zur Karte 3 geschickt, um die Existenz der Datei namens "2PAY.SYS" zu erfragen. Dieses Kommando wird von der Karte 3 positiv beantwortet. Demzufolge handelt es sich um eine Karte der Art PAYMENT.

Anhand der oben genannten Tabelle ermittelt die Zugriffssteuerungseinheit 5 für Karten, dass die Applikation 19 für Karten der Art PAYMENT registriert ist.

Die Zugriffssteuerungseinheit 5 für Karten veranlasst, das Sicherheitsmodul 21 mittels des privilegierten Kanals 22 einen nicht privilegierten Kanal 25 für die Applikation 19 zum Kartenleser 2 zu schalten.

Die Zugriffssteuerungseinheit 5 informiert die Applikation 19, dass eine Karte 3 der Art PAYMENT anwesend ist und ein nicht privilegierter Kanal 25 für sie geschaltet wurde.

Die Applikation 19 führt die Verarbeitung für offene Zahlungssysteme aus. Während der Verarbeitung werden mehrere Kommandos mittels des nicht privilegierten Kanals 25 zur Karte 3 geschickt und von dieser beantwortet.

Nach Abschluss der Verarbeitung für offene Zahlungssysteme informiert die Applikation 19 die Zugriffssteuerungseinheit 5 für Karten über das Ende der Transaktion.

Die Zugriffssteuerungseinheit 5 für Karten veranlasst das Sicherheitsmodul 21 mittels des privilegierten Kanals 22 den nicht privilegierten Kanal 25 für die Applikation 19 zum Kartenleser 2 abzuschalten.

Die Zugriffssteuerungseinheit 5 für Karten veranlasst den Kartenleser 2 über das Sicherheitsmodul 21 mittels des Kanals 22 darauf zu warten, dass die Karte 3 aus dem Funkfeld (nicht dargestellt) entfernt wird.

Zu diesem Zweck sendet der Kartenleser 2 periodisch das Kommando, um die Anwesenheit einer Karte 3 der Technologie ISO/IEC 14443 Typ A zu erfragen. Wenn eine Antwort beispielsweise dreimal in Folge ausbleibt, wird angenommen, dass die Karte 3 entfernt wurde. Der Kartenleser 2 informiert die Zugriffssteuerungseinheit 5 für Karten, dass die Karte 3 aus dem Feld entfernt wurde. Damit ist der Vorgang beendet und kann erneut beginnen.

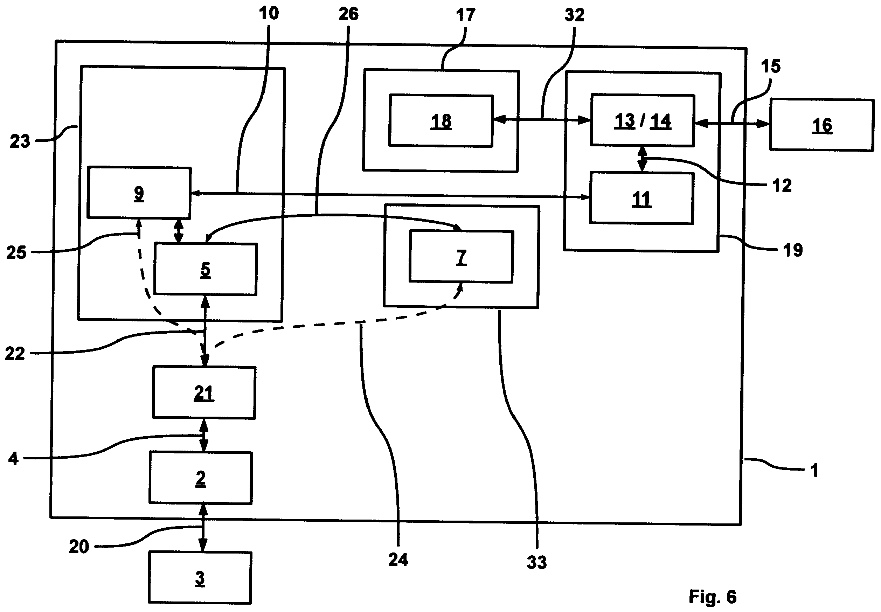

Fig. 6 zeigt eine weitere Ausführungsform, bei der die Verarbeitungseinheit 9 für offene Zahlungssysteme eine Schnittstelle bietet, um Transaktionen einzustellen. Wird eine Transaktion von der Applikation 19 eingestellt, so fordert die Verarbeitungseinheit 9 für offene Zahlungssysteme alle Karten von der Zugriffssteuerungseinheit 5 für Karten an, die diese Art von Transaktion unterstützen. Wird eine entsprechende Karte 3 gefunden, so wird die Transaktion durchgeführt und das Ergebnis der Transaktion an die Applikation 19 zurückgeliefert. Die Verarbeitungseinheit 9 für offene Zahlungssysteme wird in einem Prozess mit der Zugriffssteuerungseinheit 5 für Karten ausgeführt. Beide sind in dem Applikationsserver 23 integriert. Dieses bietet die Möglichkeit, anderen Applikationen keinen Zugriff auf Karten 3 für offene Zahlungssysteme zu gewähren. Dies weist den Vorteil auf, dass die Möglichkeit für Geschäftsmodelle besteht, die den Zugriff auf einzelne mitgelieferte zertifizierte Kernel der Verarbeitungseinheit 9 für offen Zahlungssysteme nur gegen Vergütung freischalten.

Gemäß Fig. 6 erfolgt die Kommunikation der Verarbeitungseinheit 9 mit der Geschäftslogik 11 für offene Zahlungssysteme über den Kanal 10 und nicht über dem Kommunikationsserver 17. Gleichermaßen erfolgt gemäß Fig. 6 die Kommunikation zwischen der Zugriffssteuerungseinheit 5 und der Verarbeitungseinheit und Geschäftslogik 7 für geschlossene Zahlungssysteme über den Kanal 26.

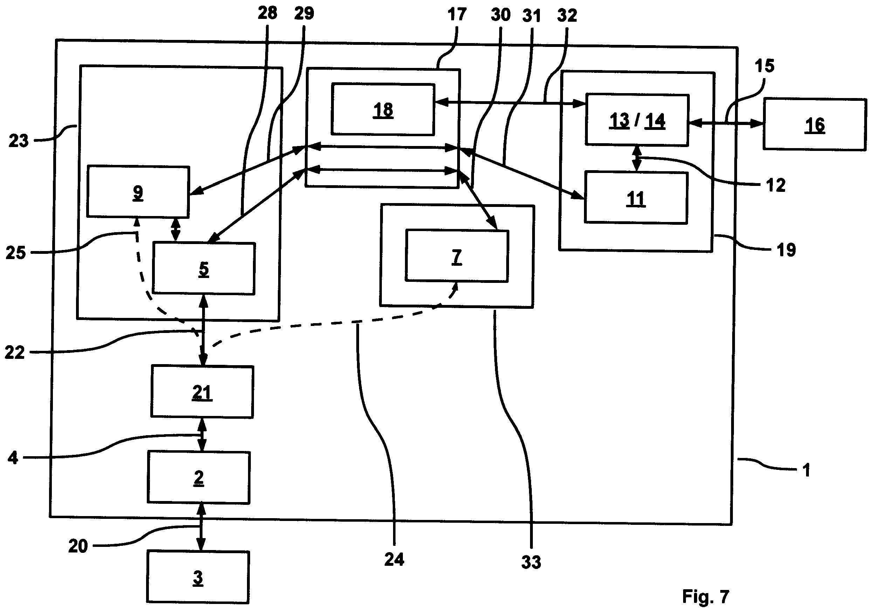

Gemäß Fig. 7 ist eine weitere Ausführungsform dargestellt. Gleiche Teile sind mit gleichen Bezugszahlen versehen. Die Kommunikation unterscheidet sich von der Kommunikation gemäß der Fig. 6, dass die Anmeldung der Applikationen 19, 33 über den Kommunikationsserver 17 erfolgt, ebenso wie die Anmeldung der Zugriffssteuerungseinheit 5 und der Verarbeitungseinheit 9.

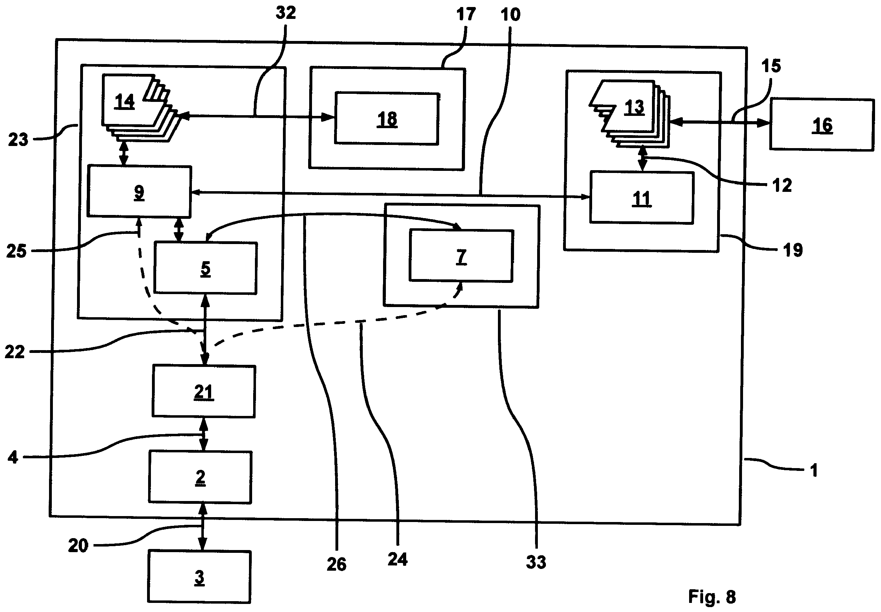

Gemäß Fig. 8 ist eine weitere Änderung des Systems vorgenommen worden, und zwar hinsichtlich der Verschlüsselungseinheit 14.

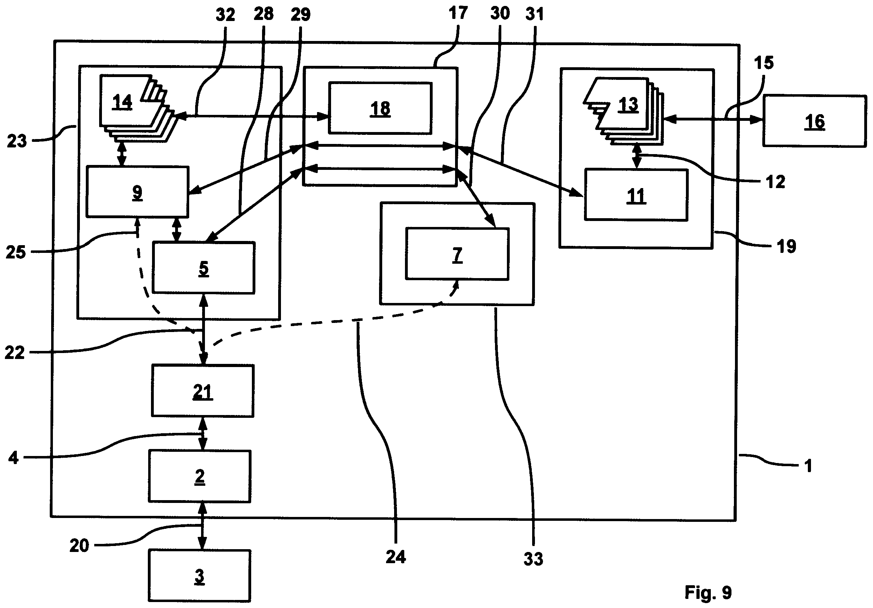

Wie in den Fig. 8 und 9 dargestellt, ist die Verschlüsselungseinheit 14 zur Anbindung an das Hintergrundsystem 16 ebenfalls in dem Applikationsserver 23 integriert. Ansonsten ist die Funktionsweise der Verfahren der Fig. 8 und 9 analog zu den Verfahren der Fig. 6 und 7.

Die Anordnung der Verschlüsselungseinheit 14 in dem Applikationsserver 23 weist den Vorteil auf, dass nur noch der Applikationsserver 23 einer Zertifizierung unterzogen werden muss. Die Applikation 19 enthält keine kritischen Daten mehr im Klartext, so dass hier eine Zertifizierung nicht mehr erforderlich ist.

Die Applikation 19 zur Anbindung an das Hintergrundsystem 16 besteht aus zwei Hauptkomponenten, nämlich der Nachrichtenformatierungseinheit 13 und der Geschäftslogik 11 für offene Zahlungssysteme. Zur Anbindung an das Hintergrundsystem 16 werden die Daten in Nachrichten formatiert, die das Hintergrundsystem 16 versteht. Zudem werden die sensitiven Daten durch ein kryptographisches Verschlüsselungsverfahren geschützt.

Der Schutz der sensitiven Daten kann entweder über die Verschlüsselung der Kommunikationsschnittstelle mit dem Hintergrundsystem 16 oder durch die Verschlüsselung der Daten innerhalb der Nachrichten erfolgen. Unterstützt das Hintergrundsystem 16 eine Verschlüsselung der Daten innerhalb der Nachrichten, so lässt sich die Verschlüsselungseinheit 14 einfach von der Applikation 19 trennen und kann in einem separaten Prozess ausgelagert werden. Die Verschlüsselungseinheit 14 stellt dann sicher, dass sensitive Daten der Karte 3 niemals unverschlüsselt an eine Applikation übergeben werden. So ist eine Sicherheitszertifizierung für die Applikation 19 nicht erforderlich oder zumindest deutlich vereinfacht, da die Applikation 19 keine sensitiven Daten kennt. Die Applikation 19 übernimmt lediglich das Formatieren der Daten in den Nachrichten gemäß den Vorgaben des Hintergrundsystems 16. Da die unterstützten Verschlüsselungsverfahren der Hintergrundsysteme 16 unterschiedlich sein können, müssen unterschiedliche Verschlüsselungseinheiten 14 für verschiedene Hintergrundsysteme 16 angeboten werden. Diese Ausführungsform weist den Vorteil auf, dass sensitive Daten der Karte 3 nie unverschlüsselt an eine Applikation 19 übergeben werden. Damit ist auch eine Sicherheitszertifizierung der Applikation 19 zur Verarbeitung von Karten 3 offener Zahlungssysteme deutlich vereinfacht.

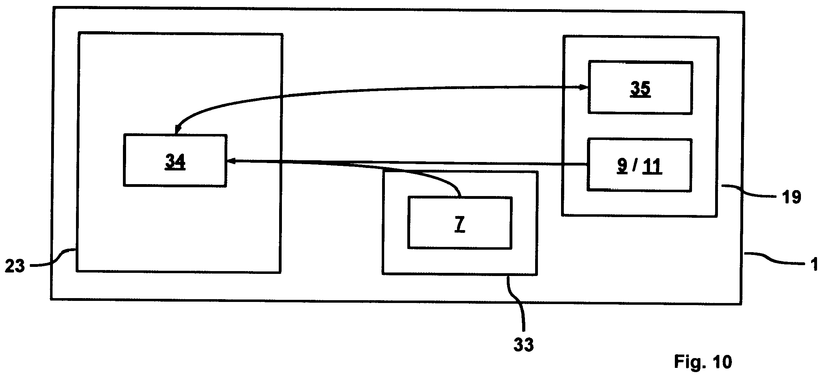

Gemäß Fig. 10 ist eine Zugriffssteuerungseinheit 34 für eine Benutzerschnittstelle dargestellt (die Benutzerschnittstelle selbst ist in Fig. 10 nicht dargestellt). Die Zugriffssteuerungseinheit 34 für die Benutzerschnittstelle synchronisiert den Zugriff auf die Benutzerschnittstelle zur akustischen und visuellen Signalisierung. Die Zugriffssteuerungseinheit 34 bietet einer Applikation 19, 33 die Möglichkeit, sich als Verarbeitungseinheit 35 für Aufträge zur Darstellung einer Nachricht an der Benutzerschnittstelle anzumelden. Hat sich eine Applikation 19, 33 als Verarbeitungseinheit 35 angemeldet, so werden alle Aufträge zur Darstellung einer Nachricht an der Benutzerschnittstelle von der Zugriffssteuerungseinheit 34 an diese Verarbeitungseinheit 35 weitergeleitet. Meldet sich die Applikation 19, 33 für die Bearbeitung von Aufträgen zur Darstellung einer Nachricht an der Benutzerschnittstelle ab, so kann sich eine andere Applikation dafür anmelden. Diese Ausführungsform weist den Vorteil auf, dass alle Aufträge zur Darstellung einer Nachricht an der Benutzerschnittstelle zentral von einer Verarbeitungseinheit 35 bearbeitet werden können und dem Systemintegrator die Möglichkeit gibt, die akustische und visuelle Signalisierung an einer zentralen Stelle optimal an die aktuelle Hardware anzupassen. Es besteht jedoch auch die Möglichkeit, einer kontextbezogenen Kontrolle, bei der der Zugriff auf die Benutzerschnittstelle zur Laufzeit von einer an eine andere Applikation übergeben wird.

### Bezugszahlen

- 1: Zahlterminal
- 2: Kartenleser
- 3: Karte
- 4: Kommunikationskanal
- 5: Zugriffsteuerungseinheit für Karten
- 6: Kommunikationskanal
- 7: Verarbeitungseinheit und Geschäftslogik für geschlossene Zahlungssysteme
- 8: Kommunikationskanal
- 9: Verarbeitungseinheit für offene Zahlungssysteme
- 10: Kommunikationskanal
- 11: Geschäftslogik für offene Zahlungssysteme
- 12: Kommunikationskanal
- 13: Nachrichtenformatierungseinheit zur Anbindung an das Hintergrundsystem 16
- 14: Verschlüsselungseinheit zur Anbindung an das Hintergrundsystem 16
- 15: Kommunikationskanal
- 16: Netzbetreiber des Hintergrundsystems zur Abwicklung von Transaktionen (Hintergrundsystem)
- 17: Kommunikationsserver
- 18: kryptographischer Dienst mit Schlüsselspeicher
- 19: Applikation für offene Zahlungssysteme
- 20: Kommunikationskanal
- 21: Sicherheitsmodul
- 22: Kommunikationskanal
- 23: Applikationsserver
- 24: Kommunikationskanal
- 25: Kommunikationskanal
- 26: Kommunikationskanal
- 27: Kommunikationskanal
- 28: Kommunikationskanal
- 29: Kommunikationskanal
- 30: Kommunikationskanal
- 31: Kommunikationskanal
- 32: Kommunikationskanal
- 33: Applikation für geschlossene Zahlungssysteme
- 34: Zugriffssteuerungseinheit für die Benutzerschnittstelle
- 35: Verarbeitungseinheit für Nachrichten an die Benutzerschnittstelle

## Patentansprüche

1. Verfahren zur Durchführung bargeldloser Zahlungsvorgänge mit Karten (3) von geschlossenen und von offenen Zahlungssystemen,
**dadurch gekennzeichnet,**
- **dass** eine Zugriffssteuerungseinheit (5) für Karten (3) mittels wenigstens eines Kartenlesers (2) erfasst, ob eine Karte (3) eines offenen (19) oder eines geschlossenen Zahlungssystems (33) in einem Erfassungsbereich des Kartenlesers (2) angeordnet ist,
- **dass** die Zugriffssteuerungseinheit (5) unmittelbar oder mittelbar entweder einen direkten Kommunikationskanal (24) zwischen dem wenigstens einen Kartenleser (2) und einer Verarbeitungseinheit (7) für geschlossene Zahlungssysteme oder einen direkten Kommunikationskanal (25) zwischen dem wenigstens einen Kartenleser (2) und einer Verarbeitungseinheit (9) für offene Zahlungssysteme freischaltet und/oder abschaltet,
- und **dass** die Verarbeitungseinheit (7) für geschlossene Zahlungssysteme und die Verarbeitungseinheit (9) für offene Zahlungssysteme in voneinander getrennten Applikationen (19, 33) arbeiten.

2. Verfahren nach Anspruch 1, **dadurch gekennzeichnet, dass** ein zwischen der Zugriffssteuerungseinheit (5) für Karten und dem Kartenleser (2) vorgesehenes Sicherheitsmodul (21) von der Zugriffssteuerungseinheit (5) angesteuert wird, und dass das Sicherheitsmodul (21) gemäß der Ansteuerung Kommunikationskanäle (24, 25) freischaltet oder abschaltet.

3. Verfahren nach Anspruch 1 oder 2, **dadurch gekennzeichnet, dass** die Zugriffssteuerungseinheit (5) für Karten bei Erfassen einer Karte (3) eines offenen Zahlungssystems (19) die Verarbeitungseinheit (9) für offene Zahlungssysteme informiert, dass eine Karte (3) für offene Zahlungssysteme anwesend ist, und dass ein Kommunikationskanal (25) für die Kommunikation freigeschaltet wird, und dass mehrere Kommandos mittels des Kommunikationskanals (25) zur Karte (3) geschickt und von dieser beantwortet werden.

4. Verfahren nach Anspruch 1 oder 2, **dadurch gekennzeichnet, dass** die Zugriffssteuerungseinheit (5) für Karten bei Erfassen einer Karte (3) eines geschlossenen Zahlungssystems (33) die Verarbeitungseinheit (7) für geschlossene Zahlungssysteme informiert, dass eine Karte (3) für geschlossene Zahlungssysteme anwesend ist, und dass ein Kommunikationskanal (24) für die Kommunikation freigeschaltet wird, und dass mehrere Kommandos mittels des Kommunikationskanals (24) zur Karte (3) geschickt und von dieser beantwortet werden.

5. Verfahren nach einem der vorhergehenden Ansprüche, **dadurch gekennzeichnet, dass** nach Abschluss einer Transaktion die Verarbeitungseinheit (9) für offene Zahlungssysteme oder die Verarbeitungseinheit (7) für geschlossene Zahlungssysteme die Zugriffssteuerungseinheit (5) für Karten über den Abschluss der Transaktion informiert.

6. Verfahren nach Anspruch 5, **dadurch gekennzeichnet, dass** der Kommunikationskanal (24, 25) von der Zugriffssteuerungseinheit (5) für Karten oder dem Sicherheitsmodul (21) abgeschaltet wird.

7. Verfahren nach einem der vorhergehenden Ansprüche, **dadurch gekennzeichnet, dass** die Zugriffssteuerungseinheit (5) für Karten oder das Sicherheitsmodul (21) den Kartenleser (2) veranlasst, darauf zu warten, dass die Karte (3) aus einem Erfassungsbereich des Kartenlesers (2) entfernt wird.

8. Verfahren nach einem der vorhergehenden Ansprüche, **dadurch gekennzeichnet, dass** der Kartenleser (2) periodisch Kommandos sendet, um die Anwesenheit einer Karte (3) zu erfragen.

9. Verfahren nach Anspruch 8, **dadurch gekennzeichnet, dass** der Kartenleser (2) die Zugriffssteuerungseinheit (5) für Karten informiert, wenn eine Karte (3) entfernt wird oder wenn eine Karte (3) in einen Erfassungsbereich des Kartenlesers (2) gebracht wird.

10. Verfahren nach einem der vorhergehenden Ansprüche, **dadurch gekennzeichnet, dass** Daten der Karten (3) der offenen Zahlungssysteme verschlüsselt übertragen werden.

11. Verfahren nach einem der vorhergehenden Ansprüche, **dadurch gekennzeichnet, dass** Schlüssel für eine sichere Übertragung von Daten der Karten (3) der offenen Zahlungssysteme in einem kryptographischen Dienst (18) mit Schlüsselspeicher geschützt und von einer Applikation (19) lediglich benutzt werden.

12. Verfahren nach einem der vorhergehenden Ansprüche, **dadurch gekennzeichnet, dass** eine Applikation (19) mit der Verarbeitungseinheit (9) für offene Zahlungssysteme und einer Geschäftslogik (11) für offene Zahlungssysteme und der Verschlüsselungseinheit (14) zur Anbindung an ein Hintergrundsystem (16) als sicherheitszertifizierte Applikation (19) mit der Zugriffssteuerungseinheit (5) für Karten oder dem Sicherheitsmodul (21) kommuniziert, und dass ein Applikationsserver (23) mit der Zugriffssteuerungseinheit (5) für Karten als sicherheitszertifizierter Applikationsserver (23) mit dem Kartenleser (2) und/oder dem Sicherheitsmodul (21) kommuniziert.

13. Verfahren nach einem der Ansprüche 1 bis 11, **dadurch gekennzeichnet, dass** eine Applikation (19) mit einer Geschäftslogik (11) für offene Zahlungssysteme und der Verschlüsselungseinheit (14) zur Anbindung an ein Hintergrundsystem (16) als sicherheitszertifizierte Applikation (19) mit der Zugriffssteuerungseinheit (5) für Karten oder dem Sicherheitsmodul (21) kommuniziert, und dass der Applikationsserver (23) mit der Zugriffssteuerungseinheit (5) für Karten und die Verarbeitungseinheit (9) für offene Zahlungssysteme als sicherheitszertifizierter Applikationsserver (23) mit dem Kartenleser (2) und/oder dem Sicherheitsmodul (21) kommuniziert.

14. Verfahren nach einem der Ansprüche 1 bis 11, **dadurch gekennzeichnet, dass** eine Applikation (19) mit der Geschäftslogik (11) für offene Zahlungssysteme als nicht sicherheitszertifizierte Applikation mit der Zugriffssteuerungseinheit (5) für Karten oder dem Sicherheitsmodul (21) kommuniziert, und dass der Applikationsserver (23) mit der Zugriffssteuerungseinheit (5) für Karten und die Verarbeitungseinheit (9) für offene Zahlungssysteme und die Verschlüsselungseinheit (14) zur Anbindung an das Hintergrundsystem (16) als sicherheitszertifizierter Applikationsserver (23) mit dem Kartenleser (2) und/oder dem Sicherheitsmodul (21) kommuniziert.

15. Verfahren nach einem der vorhergehenden Ansprüche, **dadurch gekennzeichnet, dass** ein dynamisches Registrieren von Verarbeitungseinheiten für offene und geschlossene Zahlungssysteme (19, 33) und/oder von der Zugriffssteuerungseinheit (5) für Karten und/oder von der Verarbeitungseinheit (9) für offene Zahlungssysteme und/oder von der Geschäftslogik (11) für offene Zahlungssysteme am Kommunikationsserver (17) durchführbar ist.
